# EUROPEAN PATENT APPLICATION

(11) **EP 0 662 617 A2**
(43) Date of publication of application: **12.07.1995**
(21) Application number: 95300045.2
(22) Date of filing: 05.01.1995
(51) Int. Cl.: G01S 15/96, G01S 15/74, G01S 7/00

(54) **Integration of telemetry and sonar technologies**

(30) Priority: 11.01.1994 US 179949
(71) Applicant: ONTARIO HYDRO, Toronto, Ontario M5G 1X6 (CA)
(72) Inventor: Patrick, Paul H., Milton, Ontario L9T 2Y1 (CA); McKinley, Robert S., Rockwood, Ontario N0B 2K0 (CA); Pach, Marek T., Willowdale, Ontario M2R 3W5 (CA); Strathearn, Stewart, Udora, Ontario L0C 1L0 (CA)
(74) Representative: Smith, Norman Ian

(57) **Abstract**

A system for analyzing the behaviour of fish and fish populations comprises a sonar transceiver (12) and a telemetry transmitter (14) applied to a fish for transmitting signals to a telemetry receiver (10). In one embodiment, the sonar transceiver (12) includes switching means responsive to transmissions emitted by the telemetry transmitter. In an alternate embodiment, the telemetry transmitter includes switching means responsive to ultrasonic signals emitted by the sonar transceiver.

## Description

### Field of Invention

This invention relates to a system for analyzing the behaviour of fish and fish populations. In particular, this invention relates to a system for monitoring fish populations and movement combining sonar and telemetry.

### Background of the Invention

Biological assessment of aquatic environments is important to determining the environmental impact of many arthropogenic developments, such as the construction and operation of hydroelectric generating facilities where such assessments are required by regulatory authorities. The potential impact of such industries on resident and migratory fish stocks is of considerable importance ecologically, and assessments of this nature assist in man's understanding of aquatic biology in general.

Conventional methods of conducting such assessments generally involve discreet sampling procedures, typically using nets to determine fish composition and density in a given area. However, such methods do not assist in assessing reproductive and migratory behaviour. Even data concerning fish composition and density is often inaccurate, because fish are not distributed randomly in a water column, and to avoid being exposed to hazardous situations personnel involved in the sampling process may not be placing nets in the most suitable locations, particularly in proximity to an operating power plant.

Other disadvantages to this type of sampling process are its relatively high cost; sampling is not continuous; data analysis is not in "real time" because the netted samples are always evaluated some time after the fish is caught; and the process is destructive, not only to the targeted species but to other species as well.

Some of these problems have been addressed by more recent sampling methods involving either sonar or telemetry. However, each of these methods has its own limitations. Sonar techniques cannot classify echoes for fish speciation, and the area of coverage is dictated by the relatively small acoustical cone emitted by the transducer. On the other hand, telemetry techniques can detect only the presence of individual fish tagged with a transmitter, and therefore cannot estimate population density or fish size.

The present invention overcomes these disadvantages by providing a system for monitoring fish stocks which combines sonar and telemetry, but in a cost effective way. The system utilizes a conventional sonar transceiver and a conventional telemetry receiver, but the transmitting tag applied to a fish is provided with an activation circuit. In the preferred embodiments of the invention, the tag either activates the sonar or is activated by the sonar. In the former case the sonar transceiver remains inactive until the tagged fish ventures within range of the telemetry receiver, at which time a radio signal emitted by the tag activates the sonar; in the latter case, the tag is provided with an acoustic sensor circuit so that its transmitter remains inactive until the fish enters the acoustical cone emitted by the sonar, and the ultrasonic sound activates the tag's transmitter causing the tag to emit a signal which is then received by the telemetry receiver.

The advantages of the present invention include the combined advantages of using sonar or telemetry individually. The invention thus provides reliable and continuous data acquisition sufficient to assess fish composition and density, as well as reproductive and migratory behaviour, with less labour cost and risk to the site crew, and without destroying the targeted species or other species.

These advantages are realized in a particularly energy-efficient manner, in that it is unnecessary for both the sonar transceiver and the transmitting tag to be constantly energized, thus resulting in not only a cost saving but also in increased longevity of the power source (typically lithium batteries). This latter advantage is particularly important in the case of the tag, which is not serviceable once attached to or implanted in a fish, but also in the use of sonar in remote locations.

### Summary of the Invention

The present invention thus provides a system for monitoring fish behaviour comprising a sonar transceiver, and a telemetry transmitter for application to a fish, for transmitting signals to a telemetry receiver, wherein either the sonar transceiver includes switching means responsive to transmissions emitted by the telemetry transmitter, or the telemetry transmitter includes switching means responsive to ultrasonic signals emitted by the sonar transceiver.

The present invention further provides a telemetry transmitter for application to a fish for sending a signal to a telemetry receiver, including switching means responsive to an ultrasonic signal emitted by a sonar transceiver whereby the transmitter is activated by the ultrasonic signal.

The present invention further provides in combination, a sonar transceiver activated by a telemetry signal, and a telemetry transmitter for activating the sonar transceiver adapted to be applied to a fish.

The present invention further provides in combination, a sonar transceiver and a telemetry transmitter adapted to be applied to a fish including a switch responsive to ultrasonic signals emitted by the sonar transceiver.

### Brief Description of the Drawings

In drawings which illustrate by way of example only a preferred embodiment of the subject invention,
Figures 1a and 1b are diagrammatic representations of the monitoring system involving a passive transmitting tag with an active sonar transceiver;
Figures 2a and 2b are diagrammatic representations of a further preferred embodiment of the monitoring system involving an active transmitting tag with a passive sonar transceiver;
Figure 3 is a schematic diagram of a telemetry tag activated by ultrasonic transmissions from the sonar transceiver of Figure 1; and
Figure 4 is a block diagram of a telemetry receiver control for the sonar transceiver of Figure 2.

### Detailed Description of the Invention

The preferred embodiment of the system of the present invention includes a conventional radio or sonic telemetry receiver 10 and a conventional sonar transceiver 12, both buoyant for use in locations remote from land, and a tag 14 which is applied to a fish by being attached thereto or implanted therein in a conventional fashion.

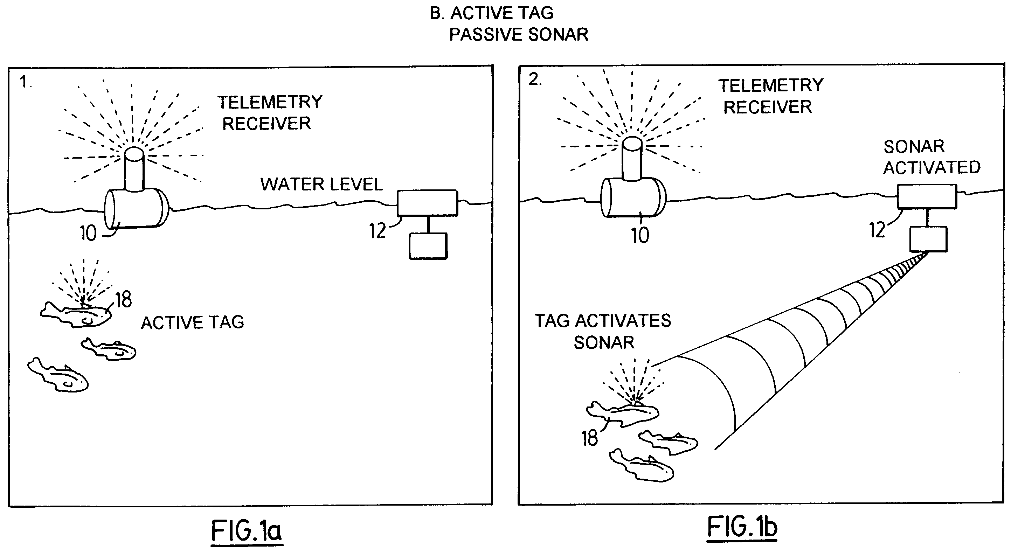

In a first embodiment, herein termed "active tag/passive sonar", illustrated in Figures 1a and 1b, the tag 14 is continuously emitting a radio signal and the sonar transceiver unit 12 is provided with telemetric-controlled switching means of conventional design which activates the sonar transceiver 12 when a fish carrying the tag 14 enters the reception range of the radio controlled switch. As shown notionally in Figure 1a, the sonar transceiver 12 remains inactive until a tag-bearing fish 18 strays within the effective telemetry range of the sonar unit 12, at which point the sonar transceiver is activated as shown in Figure 1b, and data acquisition commences. Since it is only active in the presence of a tagged fish 18, the life of the sonar power supply is increased considerably.

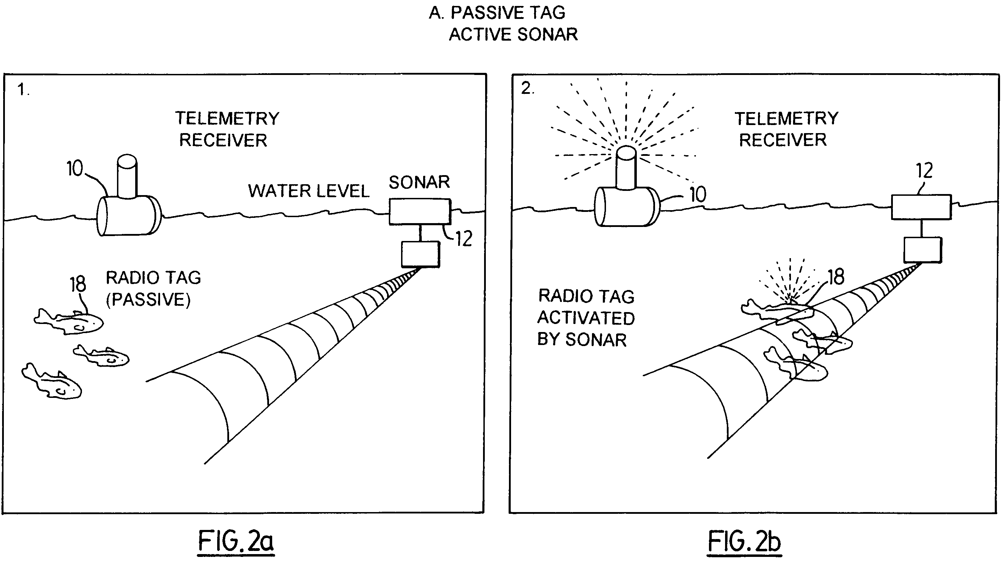

In a second embodiment, herein termed "passive tag/active sonar", illustrated in Figures 2a and 2b, the sonar transceiver 12 is continuously activated. The telemetry tag 14 is provided with a sonar-activated switching means which allows the transmitter in the tag 14 to remain inactive as notionally illustrated in Figure 2a, except when within the acoustical cone of the sonar signal, shown in Figure 2b. This embodiment presents advantages over the first embodiment described above, in that the tag 14 is more difficult to retrieve for battery replacement than the sonar unit 12, and the continuously operating sonar unit will detect the presence of fish and thus produce data even if there is no tag-bearing fish in the vicinity.

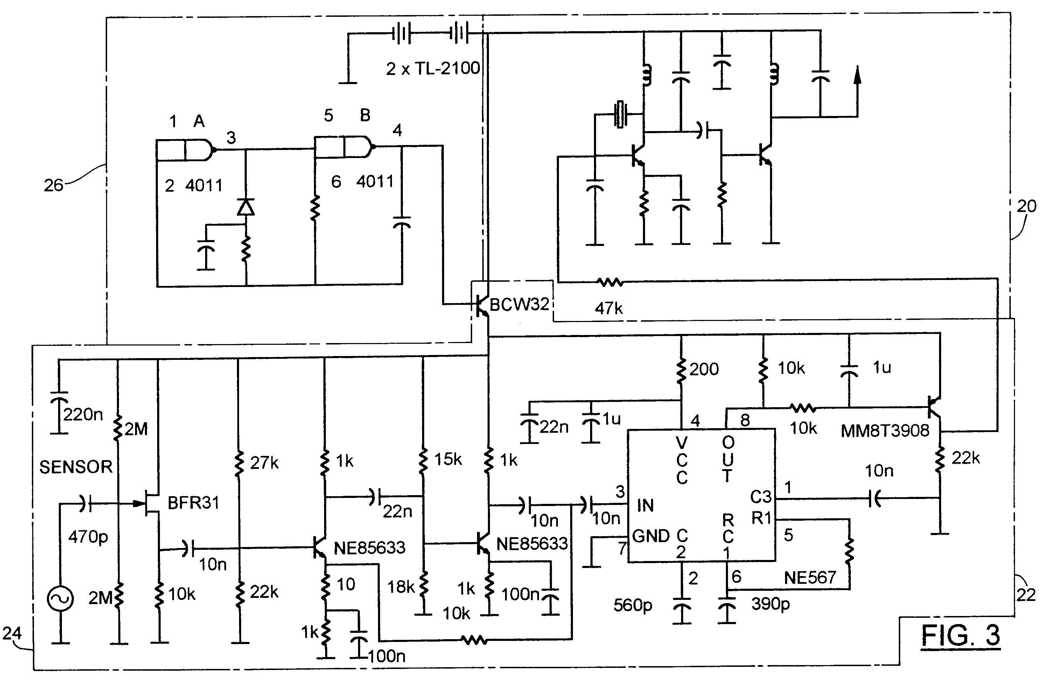

Figure 3 provides a schematic diagram of the circuitry of the tag 14 for the passive tag/active sonar embodiment of the invention. The tag 14 incorporates a conventional radio transmitter 20 switched by a sonic amplifier 24 through phase locked loop 22. A low duty monostable circuit 26 deactivates the tag 14 once the fish has moved out of the acoustical cone.

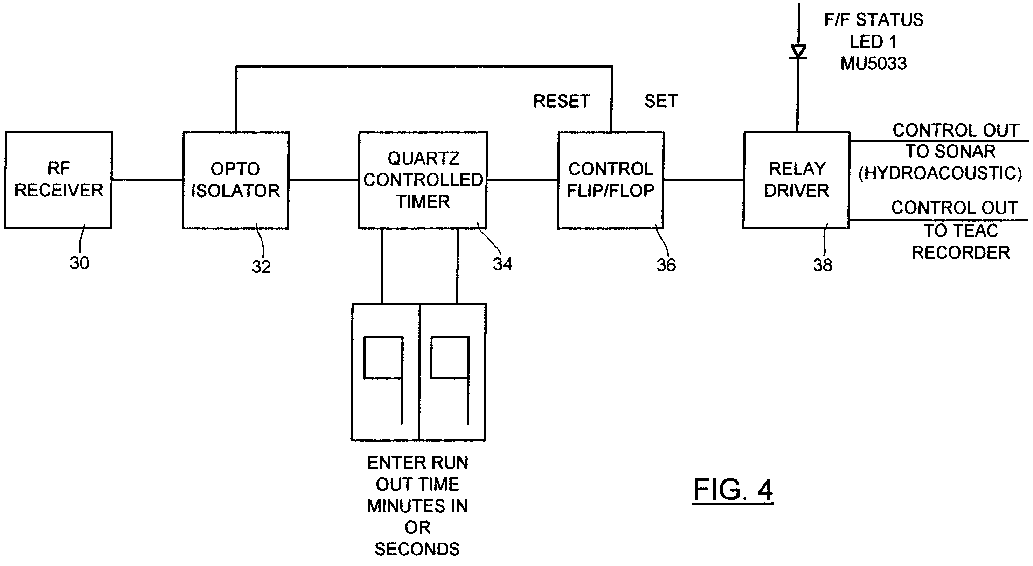

Figure 4 is a block diagram illustrating the components of the sonar transceiver 12 in the active tag/passive sonar embodiment of the invention. An RF receiver 30 activates an opto-isolator 32 controlled by a quartz timer 34 and flip flop 36. When the RF receiver 30 receives a signal from the tag 14, the opto-isolator activates the relay driver 38 which switches on the sonar transceiver 12 and optionally a recording device 40.

It will thus be appreciated that the telemetry and sonar units 10,12 have been combined in the invention in such a way that the telemetry transmitter, contained in the tag 14, can be used not only to transmit information to the receiver 10, but also to activate the sonar transceiver 12; alternatively, the sonar unit can be used not only as a means of acquiring fish composition and density data, but also to activate the telemetry transmitter for the time that the fish remains in the acoustical cone.

The invention having been so described, certain modifications and adaptations will be obvious to those skilled in the art. The invention includes all such modifications and adaptations which fall within the scope of the appended claims.

## Claims

1. A system for monitoring fish behaviour comprising
a sonar transceiver, and
a telemetry transmitter for application to a fish, for transmitting electromagnetic signals to a telemetry receiver,
wherein either the sonar transceiver includes switching means responsive to transmissions emitted by the telemetry transmitter, or the telemetry transmitter includes switching means responsive to ultrasonic signals emitted by the sonar transceiver.

2. The system of claim 1 in which the sonar transceiver is buoyant.

3. The system of claim 1 including a telemetry receiver for receiving signals from the telemetry transmitter.

4. The system of claim 3 in which the telemetry receiver is buoyant.

5. A telemetry transmitter for application to a fish for sending a radio signal to a telemetry receiver, including switching means responsive to an ultrasonic signal emitted by a sonar transceiver whereby the transmitter is activated by the ultrasonic signal.

6. The telemetry transmitter of claim 5 wherein the transmitter is active only in the presence of the ultrasonic signal.

7. In combination, a sonar transceiver activated by an electromagnetic telemetry signal, and a telemetry transmitter adapted to be applied to a fish for activating activating the sonar transceiver.

8. In combination, a sonar transceiver and a radio telemetry transmitter adapted to be applied to a fish including a switch responsive to ultrasonic signals emitted by the sonar transceiver.

9. The combination of claim 8 in which the transmitter is active in only the presence of the ultrasonic signal.
